# FASCICULE DE BREVET EUROPEEN

(11) **EP 0 387 344 B1**
(45) Date de publication et mention de la délivrance du brevet: **08.09.1993**
(21) Numéro de dépôt: 89911252.8
(22) Date de dépôt: 26.09.1989
(51) Int. Cl.: H01S 3/03, H05B 7/18, H01F 31/06, H01S 3/227

(54) **DISPOSITIF DE CHAUFFAGE A TRES HAUTE TEMPERATURE**
HEIZGERÄT FÜR SEHR HOHE TEMPERATUREN
VERY HIGH TEMPERATURE HEATING DEVICE

(30) Priorité: 27.09.1988 FR 8812613
(43) Date de publication de la demande: 19.09.1990
(73) Titulaire: COMMISSARIAT A L'ENERGIE ATOMIQUE, 75015 Paris Cédex 15 (FR)
(72) Inventeur: CHAUDANSON, Bernard, F-26700 La Garde-Adhemar (FR)
(74) Mandataire: Mongrédien, André
(86) Numéro de dépôt international: FR8900490
(87) Numéro de publication internationale: WO9003674

(56) Documents cités:
- JOURNAL OF PHYSICS E7SCIENTIFIC INSTRUMENTS, vol. 21, no. 4, avril 1988; IOP Publishing Ltd.,Bristol, GB; J.K. MITTAL et al.: "Design and performance of a 20 watt copper vapour laser", pages 388-392
- APPLIED PHYSICS B7PHOTOPHYSICS & LASER CHEMISTRY, vol. B44, no. 1, septembre 1987; Springer-Verlag, Berlin, DE; Z.G. HUANG et al.: "A gold-vaporlaser using Ne-H2 as buffer gas", pages 57-59
- SOVIET JOURNAL OF QUANTUM ELECTRONICS , vol. 7, no. 12, décembre 1978; American Institute of Physics, US; H. KNEIPP et al.: "Discharge-heated copper vapor laser", pages 1454-1455

## Description

La présente invention a pour objet un dispositif de chauffage à très haute température. Son domaine d'application recouvre de nombreuses activités industrielles nécessitant des températures pouvant aller jusqu'à 2500°C. Elle s'applique particulièrement bien au maintien à haute température du métal dans un laser à vapeur métallique ou encore au dégazage de certains matériaux.

Il est très délicat, en pratique, d'obtenir de hautes températures (supérieures à 1000°C). Les principaux dispositifs connus utilisent l'effet joule, l'induction, ou encore le chauffage par décharges électriques impulsionnelles ou continues.

L'exemple du maintien à haute température d'un métal en vue de sa vaporisation dans un laser à vapeur métallique illustre particulièrement bien le problème posé par le chauffage à haute température. Une enceinte contient des billes du métal à vaporiser dans l'atmosphère d'un gaz tampon. Pour préparer sa vaporisation, les billes sont portées à une température avoisinant 1000°C.

Certains dispositifs connus utilisent une chemise chauffante pour envelopper l'enceinte contenant les billes de métal. Cette chemise est parcourue par un courant et donc dégage de la chaleur par effet joule. Elle est reliée à une alimentation électrique continue débitant de très basses tensions (de l'ordre de 20 V).

Outre que ces dispositifs nécessitent une alimentation continue sophistiquée, la chemise chauffante est fragile et de durée de vie limitée.

Pour chauffer le métal avant sa vaporisation, d'autres dispositifs connus utilisent directement les décharges électriques impulsionnelles qui permettent l'effet laser. Ces décharges impulsionnelles sont obtenues à partir d'un système déclencheur à thyratron relié à une alimentation électrique continue.

Ce chauffage par impulsions électriques peut être remplacé par un chauffage à décharge électrique continue. Cette décharge nécessite elle aussi une alimentation continue capable de débiter des tensions de l'ordre de la dizaine de milliers de volts. Cette alimentation doit permettre le maintien d'une décharge électrique dans le gaz tampon à une valeur moyenne stable, alors que l'impédance du plasma formé par le gaz tampon varie. D'autre part, la moitié de la puissance fournie par l'alimentation électrique est perdue dans des résistances ballast nécessaires au bon fonctionnement du dispositif.

On voit que pour ces moyens connus utilisés pour chauffer le métal dans un laser à vapeur métallique, des alimentations électriques continues sont nécessaires.

Le chauffage par décharges impulsionnelles fait appel à un élément déjà incorporé au laser : le système déclencheur à thyratron. Mais ce système est fragile et ne fonctionne qu'un nombre d'heures limitées. Il est donc préjudiciable de l'utiliser à d'autres fins que pour l'obtention de l'effet laser. Ce dispositif n'est pas adapté au chauffage et au maintien en température du métal.

Ces dispositifs connus pour le chauffage du métal dans un laser à vapeur de cuivre posent donc des problèmes de maintenance, certains éléments des alimentations continues ainsi que les thyratrons devant être remplacés fréquemment. Il est coûteux de les utiliser dans des équipements fonctionnant en site industriel, pour la fonction chauffage.

Un autre type de problème est posé par le chauffage à haute température pour Le dégazage d'un matériau.

De manière connue, on utilise des fours fonctionnant par effet joule. Les éléments à dégazer sont incorporés dans une enceinte intermédiaire sous vide. Le chauffage est indirect, la chaleur se propageant de l'extérieur de cette enceinte vers l'intérieur. Cette configuration n'est pas favorable ; beaucoup d'énergie est gaspillée avant d'atteindre La température désirée.

Les fours à induction constituent un deuxième type de dispositif connu permettant le dégazage. Mais dans ce cas, le dégazage des inducteurs qui survient à haute température, pollue Les matériaux à traiter.

On comprend que le chauffage à haute température est une opération délicate, posant des problèmes particuliers suivant les situations.

Le but de la présente invention est de fournir un dispositif de chauffage à très haute température ne nécessitant pas d'alimentation continue à haute tension et s'adaptant facilement à divers environnements.

Les deux documents J.Phys.E.: Sci.Instrum., vol.21, no.4, avril 1988, pages 388-392 et Sov.J.Quant.Electr., vol.7, no.12, décembre 1978, pages 1454-1455 décrivent des dispositifs de chauffage pour des lasers à vapeur de cuivre conformément au préambule de la revendication 1.

De façon plus précise, l 'invention concerne un dispositif de chauffage à très haute température qui comprend :
- une conduite en matériau réfractaire et isolant, remplie d'un gaz tampon,
- deux électrodes fixées à la conduite de manière à permettre la création et le maintien d'une décharge électrique alternative entre elles,
- une source d'alimentation électrique alternative,
- un transformateur à fuites magnétiques comportant un bobinage primaire présentant deux bornes connectées chacune à une sortie de ladite source d'alimentation et un bobinage secondaire présentant deux bornes connectées chacune à une desdites électrodes.

Une décharge électrique alternative est initiée entre les électrodes. Le gaz tampon forme alors un plasma.

Le fait que la décharge soit alternative permet de diminuer l'usure des électrodes due à une circulation monodirectionnelle du courant dans le cas d'une décharge continue.

Selon un mode de réalisation préférée, l'invention comporte en outre un gradateur relié par une première entrée à une sortie de la source d'alimentation et par une sortie à la borne du bobinage primaire correspondant à cette sortie de la source d'alimentation, cette borne étant déconnectée de cette sortie.

Ce gradateur permet de donner une plus grande souplesse d'utilisation au dispositif. En effet, le transformateur à fuites magnétiques délivre une tension aux bornes du bobinage secondaire qui est une fonction de l'intensité du courant qui traverse le bobinage primaire. Le gradateur permet de faire varier cette fonction.

De nombreux types de gradateurs peuvent être utilisés dans un dispositif conforme à l'invention : gradateur à self saturable, à shunt magnétique, à thyristors et à autotransformateur variable.

De manière préférée, on utilise un gradateur à thyristors.

Ce gradateur peut être commandé par un régulateur de manière à obtenir la puissance électrique désirée, débitée aux bornes du bobinage secondaire. Une sortie de ce régulateur est connectée à une seconde entrée du gradateur. Une première entrée du régulateur est connectée aux bornes du bobinage primaire : elle permet la mesure de la tension à ces bornes.

Une autre entrée du régulateur est connectée à un transformateur d'intensité situé à la sortie du gradateur : elle permet la mesure de l'intensité du courant.

Ce régulateur permet d'automatiser le fonctionnement du dispositif selon l'invention. Il suffit alors à l'utilisateur d'afficher la puissance électrique désirée, débitée aux bornes du bobinage secondaire (qui correspond approximativement à une température à l'intérieur de la conduite. Le régulateur commande le gradateur de manière à obtenir cette puissance.

Le gaz tampon peut être mis en circulation pour augmenter la durée de vie du dispositif. Dans ce cas, une première canalisation relie la conduite à une entrée d'un circuit pneumatique comprenant au moins une pompe. Une seconde canalisation la relie à une sortie dudit circuit pneumatique.

Le gaz tampon doit être inerte pour éviter toute réaction chimique, et facilement ionisable.

Le gaz peut être choisi parmi l'hydrogène (H₂), l'hélium (He), le néon (Ne), l'argon (Ar), le krypton (Kr), le xénon (Xe), l'azote (N₂), le gaz carbonique (CO₂). Ce peut être aussi un mélange d'hydrogène et de néon. De manière préférée, le gaz tampon est choisi parmi le néon, l'hélium ou un mélange de néon et d'hydrogène.

La conduite est constituée en un matériau isolant et réfractaire. Elle doit être capable de résister à des chocs thermiques et des hautes températures.

De manière préférée, elle est en alumine.

Les caractéristiques et avantages de l'invention apparaîtront mieux après la description qui suit donnée à titre explicatif et nullement limitatif. Cette description se réfère à des dessins annexés sur lesquels :
- la figure 1 représente schématiquement et en perspective un dispositif selon l'invention ;
- la figure 2 représente schématiquement des courbes de fonctionnement du transformateur à fuites magnétiques ;
- la figure 3 représente schématiquement et en coupe une tête d'un laser à vapeur métallique munie d'un dispositif selon l'invention ;
- la figure 4 représente schématiquement et en coupe un appareil de dégazage muni d'un dispositif conforme à l'invention ;
- la figure 5 représente schématiquement et en coupe une variante de réalisation d'un dispositif conforme à l'invention ;
- la figure 6 représente schématiquement et suivant une coupe longitudinale une autre variante de réalisation d'un dispositif conforme à l'invention.

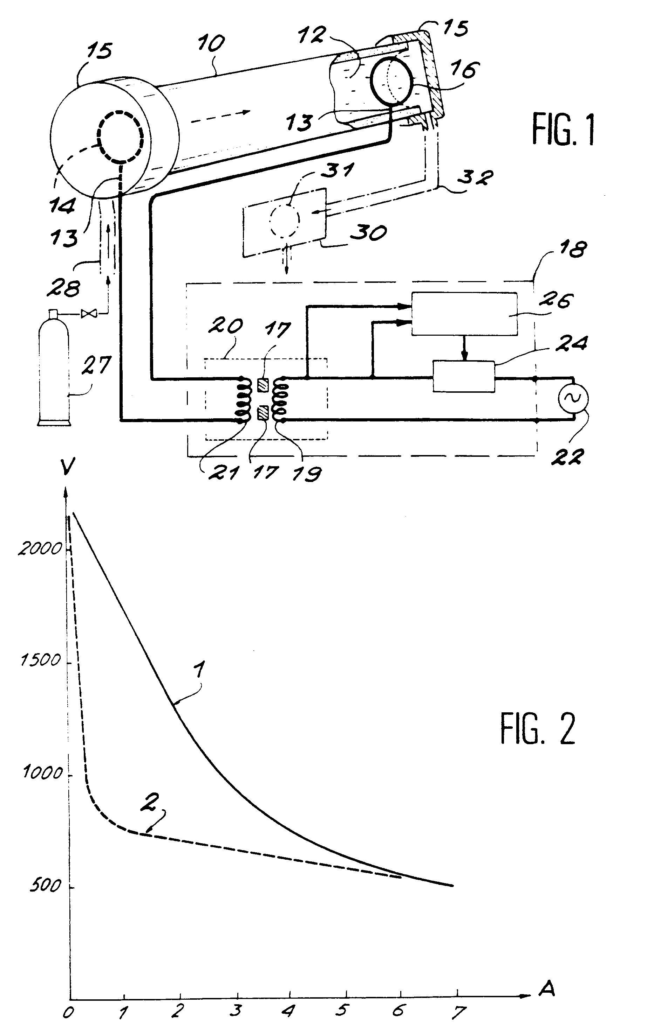

La figure 1 représente schématiquement et en perspective un dispositif selon l'invention.

Une conduite 10, en matériau réfractaire et isolant, de l'alumine par exemple, est remplie par un gaz tampon 12. La longueur de la conduite 10 dépend de l'utilisation du dispositif : elle peut être comprise entre 0,1 m et 2 m par exemple. La conduite peut être fermée, à ses extrémités, par deux embouts 15 en matériau isolant et réfractaire, de l'alumine par exemple. Le gaz peut être de l'hélium, du néon ou un mélange de néon et d'hydrogène (1 % d'H₂ pour 99 % de Ne) à une pression de quelques kPa.

Le gaz tampon peut être mis en circulation, à la vitesse d'environ 1 l/h par exemple pour être renouvelé grâce à une bouteille de gaz tampon externe 27. Dans ce cas, la conduite 10 est reliée par une première canalisation 28 à la bouteille 27 munie de détendeur approprié et à un circuit pneumatique 30 comprenant au moins une pompe 31 par une seconde canalisation 32.

Les deux électrodes 14, 16 sont en métal réfractaire, du molybdène ou du tungstène par exemple, ou en métal non réfactaire, en cuivre par exemple, dans ce cas, elles sont refroidies. Elles sont fixées aux extrémités de la conduite 10 par des attaches conductrices 13 en métal réfractaire ou en métal non réfractaire refroidi. Ces électrodes 14, 16 sont annulaires par exemple ; cela permet d'obtenir des décharges présentant une symétrie cylindrique et par conséquent une meilleure répartition de la chaleur à l'intérieur de la conduite.

Les électrodes 14, 16 sont reliées chacune à une sortie d'un système 18 permettant de les soumettre à une tension alternative. Le gaz tampon forme un plasma sous l'effet de la décharge initiée entre les électrodes. Ce système 18 comprend un transformateur à fuites magnétiques 20. Un tel transformateur comporte un bobinage primaire 19, un bobinage secondaire 21 et au moins un shunt magnétique 17. Les bornes du bobinage secondaire 21 sont chacune reliées à une sortie du système 18. Les pertes de flux magnétique sont favorisées lorsque le courant traversant le bobinage primaire 19 croit. En d'autres termes, la tension aux bornes du bobinage secondaire 21 décroît au fur et à mesure que l'intensité du courant qui traverse le bobinage primaire 19 croît. La loi de variation de la tension de sortie en fonction du courant d'entrée régit la construction du transformateur. Ainsi, on peut réaliser des transformateurs adaptés aux besoins de chaque utilisation particulière.

Le système 18 est raccordé à une source d'alimentation électrique alternative 22. Cette source d'alimentation 22 délivre une tension de 380 V monophasée, à la fréquence 50 Hz par exemple, qui correspond à la tension aux bornes du bobinage primaire 19 du transformateur 20.

Une première sortie de l'alimentation 22 est reliée à uné première borne du bobinage primaire 19 du transformateur à fuites magnétiques 20.

Une seconde sortie de l'alimentation 22 est reliée à une première entrée d'un gradateur 24. Une sortie de ce gradateur est reliée à une seconde borne du bobinage primaire 19 du transformateur à fuites magnétiques 20.

Ce gradateur 24 comporte des thyristors par exemple : il peut être fabriqué par la société Eurotherm sous la référence 425.

Le gradateur 24 peut être commandé par un régulateur 26. Ce dernier est relié par une première entrée aux bornes du bobinage primaire 19. Une seconde entrée est reliée à la sortie du gradateur 24. Une sortie du régulateur 26 est reliée à une seconde entrée du gradateur 24.

Ce régulateur permet d'obtenir la puissance désirée, débitée aux bornes du bobinage secondaire 21 du transformateur 20. A cette puissance correspond approximativement une température donnée à l'intérieur de la conduite.

La figure 2 représente schématiquement des courbes de fonctionnement d'un transformateur à fuites magnétiques, c'est-à-dire la tension (en volts) aux bornes du secondaire 21 en fonction du courant (en ampères) traversant le primaire 19. Les deux courbes représentées constituent les limites de fonctionnement du dispositif.

En trait plein, la courbe 1 correspond au fonctionnement du transformateur 30 directement connecté à l'alimentation électrique alternative 22, sans gradateur 24. Cette courbe correspond par exemple, aux exigences qui président à la fabrication d'un transformateur.

En trait tireté, la courbe 2 correspond au fonctionnement lorsque le gradateur 24 est branché. En réglant le gradateur 24 de façon adéquate (ou en le commandant par le régulateur 26), toutes les courbes intermédiaires entre 1 et 2 peuvent être obtenues.

Le gradateur 24 permet de faire varier la courbe de fonctionnement ; il donne plus de souplesse dans l'emploi du dispositif.

Dans cet exemple, la tension aux bornes du secondaire passe d'environ 2200 V à 1250 V lorsque le courant croît jusqu'à 2A : la tension chute de moitié environ ; c'est le régime de fonctionnement le plus favorable dans la majorité des utilisations.

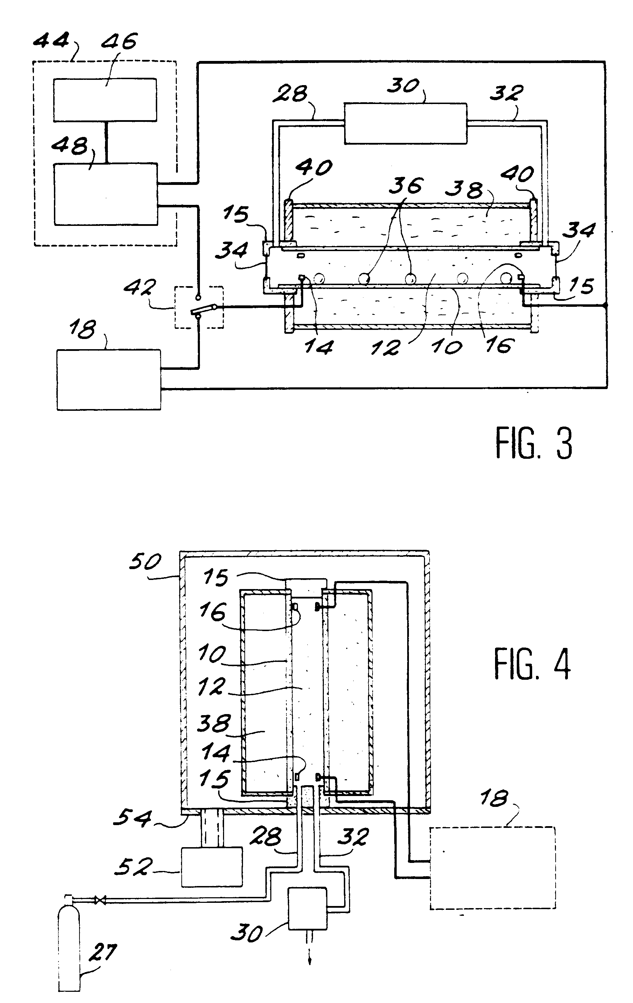

La figure 3 représente schématiquement et en coupe une tête d'un laser à vapeur métallique munie d'un dispositif selon l'invention.

Les embouts 15 sont percés d'ouvertures munies de fenêtres 34 transparentes au rayonnement du laser.

Les billes métalliques 36 sont contenues dans la renduite 10 sous atmosphère d'un mélange de néon et de 1 % d'hydrogène par exemple. La conduite mesure 1,5 m de long pour un diamètre de 40 mm, par exemple. Ce gaz 12 est mis en circulation par le circuit pneumatique 30. Dans cet exemple, le gaz ne sert pas uniquement à stabiliser la décharge : il permet aussi, quand le laser fonctionne, d'éviter que le métal vaporisé ne se dépose sur les parois de la conduite 10 ou bien sur les fenêtres 34.

Ce gaz joue aussi un rôle complexe dans les désexcitations radiatives en favorisant certaines transitions entre niveaux quantiques de la vapeur métallique.

Pour éviter les pertes de chaleur, la conduite 10 est maintenue dans un manchon 38 servant d'écran thermique. Ce manchon 38 en feutre d'alumine par exemple est maintenu entre deux flasques 40.

Un interrupteur 42 permet de connecter les électrodes 14, 16 soit aux sorties du système 18 délivrant une tension alternative nécessaire au préchauffage, soit aux sorties d'un générateur d'impulsions électriques 44.

Le dispositif selon l'invention permet de chauffer les billes métalliques 36 à une température (environ 1000°C) légèrement inférieure à leur température de fusion. C'est en fait un préchauffage qui met le laser en état de veille et rapidement prêt à l'emploi.

Si l'on veut déclencher le laser, on bascule l'interrupteur 42 pour connecter les électrodes 14, 16 sur le générateur d'impulsions électriques 44. Ce générateur est constitué d'une alimentation électrique continue 46 reliée par une sortie à une entrée d'un système déclencheur 48 à thyratron. Une sortie de ce système déclencheur 48 est reliée à l'interrupteur 42, une autre à l'électrode 16. Les impulsions électriques élèvent alors la température à l'intérieur de la conduite 10 de manière à vaporiser le métal. Cette opération ne dure qu'un quart d'heure environ. Après cette période, les impulsions excitent la vapeur métallique de manière à pouvoir obtenir l'effet laser.

Grâce au dispositif selon l'invention, les fonctions de préchauffage et de vaporisation sont assurées par des dispositifs séparés. Cela permet d'économiser l'alimentation continue 46 et le thyratron du système déclencheur 48, éléments fragiles et coûteux.

D'autre part, la possibilité de mise en état de veille permet de faire fonctionner le laser en un quart d'heure. Sans cette possibilité, une heure et demie est nécessaire pour faire chauffer les billes métalliques et les vaporiser.

La figure 4 représente schématiquement et en coupe un appareil de dégazage muni d'un dispositif conforme à l'invention.

La conduite 10, fermée par les embouts 15 et munie des électrodes 14, 16 à ses extrémités, est positionnée verticalement sous une cloche 50. Le vide est maintenu à l'intérieur de cette dernière par un pompage effectué par une pompe 52 raccordée à la cloche 50.

L'élément à dégazer est lui aussi positionné à l'intérieur de la cloche 50. Le présent appareil de dégazage s'applique particulièrement bien au dégazage du manchon isolant 38 entourant la conduite 10 appliquée à un laser à vapeur métallique.

Le gaz tampon 12 peut être statique, ou mis en circulation, ou renouvelé à l'intérieur de la conduite 10 par le circuit pneumatique 30. De manière avantageuse, dans ce dernier cas les deux canalisations débouchent dans le même embout 15. Ce dernier est préférentiellement fixé sur le support 54 de la cloche 50. Des orifices sont percés dans le support 54 de manière à permettre les différents raccordements : avec la pompe à vide 52, avec les canalisations 28, 32, et les raccordements électriques des électrodes 24, 16 et le système 18.

Grâce au dispositif selon l'invention, la température de l'élément à dégazer peut être portée à 2000°C. De manière avantageuse, la forme de la conduite 10 doit être adaptée pour permettre un chauffage de l'élément "par l'intérieur". Ainsi le dispositif est parfaitement adapté au dégazage du manchon isolant 38, la conduite 10 s'enfilant dans le manchon 38. De cette manière le chauffage s'effectue de l'intérieur vers l'extérieur, et favorise le dégazage.

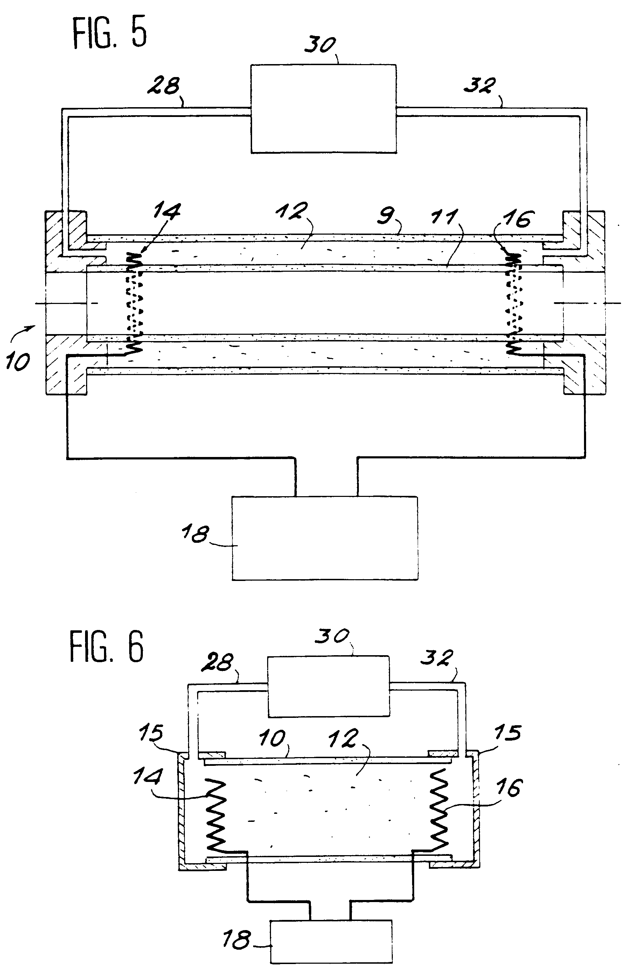

La figure 5 représente schématiquement et en coupe une variante de réalisation d'un dispositif conforme à l'invention. La conduite 10 comporte une première paroi extérieure 9 et une seconde paroi intérieure 11. La conduite est cylindrique par exemple ; les parois 9 et 11 sont cylindriques et centrées sur le même axe. A titre d'exemple, on peut citer les côtes suivant es pour la conduite 10 : une longueur de 2 m ; un diamètre de la paroi extérieure 9 de 0,10 m ; un diamètre de la paroi intérieure 11 de 0,04 m.

Le gaz tampon 12 peut circuler, être renouvelé, ou être statique entre les parois 9 et 11. Il peut être mis en mouvement par le circuit pneumatique 30 raccordé par les canalisations 28 et 32 à la conduite 10.

Les électrodes 14 et 16 situées aux extrémités longitudinales de la conduite 10 sont annulaires par exemple. Avantageusement, elles présentent une circonférence dentelée qui favorise l'homogénéîté de la décharge. Elles sont contenues entre les parois 9 et 11 et sont connectées au système 18 qui permet de les soumettre à une différence de potentiel alternative. Ce système 18 comprend au moins un transformateur à fuites magnétiques relié à une source d'alimentation électrique alternative (non représentés sur la figure 5).

Cette variante de réalisation autorise la circulation d'un fluide (liquide ou vapeur) porté à haute température sans refroidissement à l'intérieur de la conduite 10. Si le parcours le nécessite, plusieurs conduites peuvent être mises bout à bout ; certaines peuvent aussi être coudées afin d'adapter le trajet du fluide aux courbes du parcours.

La figure 6 représente schématiquement et suivant une coupe longitudinale, une autre variante de réalisation. La conduite 10 présente une forme parallélépipédique. Elle est fermée à ses extrémités de façon étanche, par deux embouts 15. A l'intérieur de la conduite 10, le gaz tampon 12 peut circuler, être renouvelé à une vitesse de 1 l/h par exemple, sous l'action du circuit pneumatique 30, le gaz tampon peut être aussi statique. La conduite 10 est reliée au circuit pneumatique 30 par deux canalisations 28, 32.

Deux électrodes 14, 16 sont fixées aux extrémités de la conduite 10. Ces électrodes 14, 16 sont connectées au système 18 qui permet de les soumettre à une différence de potentiel alternative. Ce système 18 comprend au moins un transformateur à fuites magnétiques relié à une source d'alimentation électrique alternative (non représentés sur la figure 6).

Les électrodes 14, 16 présentent une géométrie telle que la décharge soit la plus uniforme possible ; en particulier leur pourtour est dentelé. Le plasma ainsi créé chauffe uniformément les parois de la conduite 10.

Ce type de variante de l'invention peut être utilisé comme un élément chauffant recouvrant les parois intérieures d'un four, par exemple.

Quel que soit le type de variante adopté, un dispositif selon l'invention ne comprend aucun élément fragile ou demandant une maintenance assidue. Il permet le chauffage d'objets contenus à l'intérieur de la conduite comme le chauffage d'objets extérieurs à cette dernière.

Un dispositif selon l'invention est particulièrement adapté pour obtenir de hautes températures, et il permet en fait de chauffer à une température maximum d'environ 2500°C.

Cette température maximum de chauffage actuellement obtenue n'est limitée que par les matériaux constituants les électrodes et la conduite. Il va de soi que l'invention englobe d'autres matériaux que ceux cités dans la description à titre d'exemple. Le choix des matériaux utilisés dépend de l'utilisation qui est faite du dispositif conforme à l'invention. Il en va de même pour le choix du gaz tampon.

## Revendications

1. Dispositif de chauffage à très haute température comprenant :
- une conduite (10) en matériau réfractaire et isolant, remplie d'un gaz tampon (12),
- deux électrodes (14, 16) fixées à la conduite de manière à permettre la création et le maintien d'une décharge électrique alternative entre elles,
- une source d'alimentation électrique alternative (22).
- caractérise en ce qu'il comprend, en outre :
- un transformateur à fuites magnétiques (20) comportant un bobinage primaire (19) présentant deux bornes connectées chacune à une sortie de ladite source d'alimentation (22) et un bobinage secondaire (21) présentant deux bornes connectées chacune à une desdites électrodes (14,16).

2. Dispositif de chauffage selon la revendication 1, caractérisé en ce qu'il comprend en outre, un gradateur (24) relié par une première entrée à une sortie de la source d'alimentation (22) et par une sortie à la borne du bobinage primaire (19) correspondant à cette sortie de la source d'alimentation (22), cette borne étant déconnectée de cette sortie.

3. Dispositif de chauffage selon la revendication 2, caractérisé en ce qu'il comprend en outre, un régulateur (26) commandant le gradateur (24) de manière à obtenir la puissance électrique désirée, débitée aux bornes du bobinage secondaire (21), une sortie de ce régulateur (26) étant connectée à une seconde entrée du gradateur (24), une première entrée du régulateur (26) étant connectée aux bornes du bobinage primaire (19), une seconde entrée du régulateur (26) étant connectée à la sortie du gradateur (24).

4. Dispositif de chauffage selon la revendication 1, caractérisé en ce que la conduite (10) comporte une première paroi extérieure (9) et une seconde paroi intérieure (11), le gaz tampon (12) étant contenu entre la première et la seconde parois (9, 11), les électrodes (14, 16) étant fixées par des attaches (13) conductrices et réfractaires aux extrémités de la conduite (10) entre la première et la seconde parois (9, 11).

5. Dispositif de chauffage selon la revendication 1, caractérisé en ce que la conduite (10) est placée à l'intérieur d'une cloche (50) sous vide.

## Claims

1. Very high temperature heating device comprising a refractory, insulating material tube (10) filled with a buffer gas (12), two electrodes (14, 16) fixed to the tube so as to make it possible to produce and maintain an a.c. electric discharge between them, an a.c. power supply (22), characterized in that it also comprises a leakage field transformer (20) having a primary winding (19) with two terminals, each connected to an output of said supply (22) and a secondary winding (21) having two terminals, each connected to one of said electrodes (14, 16).

2. Heating device according to claim 1, characterized in that it also comprises a gradator (24) connected by a first input to an output of the power supply (22) and by an output to the terminal of the primary winding (19) corresponding to said output of supply (22), said terminal being disconnected from said output.

3. Heating device according to claim 2, characterized in that it also comprises a regulator (26) controlling the gradator (24) so as to obtain the desired electric power, supplied to the terminals of the secondary winding (21), an output of said regulator (26) being connected to a second input of the gradator (24), a first input of the regulator (26) being connected to the terminals of the primary winding (19), whilst a second input of the regulator (26) is connected to the output of the gradator (24).

4. Heating device according to claim 1, characterized in that the tube (10) has a first outer wall (9) and a second inner wall (11), the buffer gas (12) being contained between the first and second walls (9, 11), the electrodes (14, 16) being fixed by attachments (13), which are made from a conductive, refractory material, to the ends of the tube (10) between the first and second walls (9, 11).

5. Heating device according to claim 1, characterized in that the tube (10) is placed within a vacuum bell (50).

## Patentansprüche

1. Heizvorrichtung für sehr hohe Temperaturen, dabei enthaltend:
- eine Röhre (10) aus hitzebeständigem und isolierendem Material, gefüllt mit einem Puffergas (12),
- zwei Elektroden (14, 16), so an der Röhre befestigt, daß sie die Entstehung und die Aufrechterhaltung einer Wechselstromentladung zwischen sich zulassen,
- eine wechselstromquelle (22),
dadurch **gekennzeichnet,**
daß sie außerdem enthält:
- einen Streufeldtransformator (20), der eine Primärspule (19) umfaßt, die zwei Anschlußklemmen aufweist, wovon jede an eine der genannten Elektroden (14, 16) angeschlossen ist.

2. Heizvorrichtung nach Anspruch 1, dadurch gekennzeichnet, daß sie außerdem einen Stufenschalter (24) enthält, der über einem ersten Eingang mit einem Ausgang der Stromquelle (22) verbunden ist und über einen Ausgang mit der Kontaktklemme der Primärspule (19), die diesem Ausgang der Stromquelle (22) entspricht, wobei diese Kontaktklemme abgeklemmt ist von diesem Ausgang.

3. Heizvorrichtung nach Anspruch 2, dadurch gekennzeichnet, daß sie außerdem einen Regler (26) enthält, der den Stufenschalter (24) so steuert, daß die gewünschte elektrische Leistung erreicht wird, ausgegeben an den Anschlußklemmen der Sekundärspule (21), wobei ein Ausgang dieses Reglers (26) angeschlossen ist an einen zweiten Eingang des Stufenschalters (24), und ein erster Eingang des Reglers (26) angeschlossen ist an die Anschlußklemmen der Primärspule (19), und ein zweiter Eingang des Reglers (26) angeschlossen ist an den Ausgang des Stufenschalters (24).

4. Heizvorrichtung nach Anspruch 1, dadurch gekennzeichnet, daß die Röhre (10) eine erste äußere Wand (9) umfaßt und eine zweite innere Wand (11), wobei das Puffergas (12) zwischen der ersten und der zweiten Wand (9, 11) enthalten ist, und die Elektroden mittels hitzebeständigen und leitenden Haltern (13) befestigt sind an den Enden der Röhre (10) zwischen der ersten und der zweiten Wand (9, 11).

5. Heizvorrichtung nach Anspruch 1, dadurch gekennzeichnet, daß die Röhre (10) im Inneren einer unter Vakuum stehenden Glocke (50) untergebracht ist.
